# EUROPEAN PATENT SPECIFICATION

(11) **EP 2 395 576 B1**
(45) Date of publication and mention of the grant of the patent: **11.11.2015**
(21) Application number: 11169286.9
(22) Date of filing: 09.06.2011
(51) Int. Cl.: H01M 2/34, H01M 10/04

(54) **Rechargeable battery comprising a fuse**
Wiederaufladbare Batterie mit Sicherung
Batterie rechargeable comprenant un fusible

(30) Priority: 11.06.2010 US 344213 P; 15.04.2011 US 201113064798
(43) Date of publication of application: 14.12.2011
(73) Proprietor: Samsung SDI Co., Ltd., Gyeonggi-do (KR); Robert Bosch GmbH, 70442 Stuttgart (DE)
(72) Inventor: Kim, Sung-Bae, Yongin-si 446-711 (KR); Byun, Sang-Won, Yongin-si 446-711 (KR)
(74) Representative: Gulde & Partner

(56) References cited:
- EP-A1- 1 901 369
- EP-A1- 2 357 685
- WO-A1-2007/126243
- JP-A- 2006 012 602
- US-A1- 2004 126 650

## Description

### BACKGROUND OF THE INVENTION

### (a) Field of the Invention

The present invention relates to a rechargeable battery. More particularly, the present invention relates to a rechargeable battery that includes a safety apparatus having an improved structure capable of lowering a damage when overcurrent occurs.

### (b) Description of the Related Art

A rechargeable battery is a battery that is rechargeable and dischargeable unlike a primary battery that cannot be rechargeable. A rechargeable battery that has a low capacity is used in a small portable electronic device such as a cellular phone, a laptop computer and a camcorder, and a large capacity battery is widely used for a power supply for motor driving in a hybrid vehicle and the like.

Recently, a high power rechargeable battery that includes a nonaqueous electrolyte having a high energy density has been developed, and is constituted by a large capacity rechargeable battery in which a plurality of rechargeable batteries are coupled with each other in series in order to use it to drive motors of devices requiring large power, for example, electric vehicles.

In addition, one large capacity rechargeable battery generally includes a plurality of rechargeable batteries that are coupled in series, and the rechargeable battery may have cylindrical and angular shapes.

If overcurrent flows through the rechargeable battery having a case that is made of materials such as metal, etc., the temperature of the rechargeable battery increases, as a result, there is a risk of ignition. In addition, if the internal pressure of the rechargeable battery increases because the electrolyte solution is decomposed in the rechargeable battery due to the overcurrent, there is a risk of explosion of the rechargeable battery.

### SUMMARY OF THE INVENTION

The present invention has been made in an effort to provide a rechargeable battery having advantages of improving safety.

Accordingly the invention provides a rechargeable battery as set forth in claim 1. Preferred embodiments of the invention are subject of the dependent claims. An exemplary embodiment of the present invention provides a rechargeable battery that includes an electrode assembly that performs charging and discharging, a case in which the electrode assembly is installed, a cap assembly that includes a cap plate that is combined with the case and a terminal that protrudes to the outside, a fuse portion that is electrically connected to the electrode assembly and has a concave portion and a blocking member that is inserted into the concave portion and has electric insulation property.

The fuse portions may be connected in series between the terminal and the electrode assembly, a fuse hole may be formed in the fuse portion, and the blocking member may be inserted into the fuse hole. the rechargeable battery include a current collection member that electrically connects the electrode assembly to the terminal, and the fuse portion is be formed in the current collection member.

The current collection member may include a terminal connection portion that is connected to the terminal and an electrode connection portion that is bent at the terminal connection portion and connected to the electrode assembly, the fuse portion may be formed in the terminal connection portion, a lower insulation member that insulates the current collection member and the cap plate from each other may be installed between the cap plate and the current collection member, and the blocking member may be fixed to the lower insulation member.

The current collection member may include a terminal connection portion that is connected to the terminal and an electrode connection portion that is bent at the terminal connection portion and connected to the electrode assembly, and the fuse portion may be formed in the electrode connection portion.

The fuse portion may include a support plate that has a larger cross-sectional area than the concave portion and a blocking protrusion that protrudes from the support plate and is inserted into the concave portion, and when a current flow increases, the fuse portion is melted to prevent the electrode assembly from being electrically connected to the terminal.

Some embodiments of the rechargeable battery may comprise a short circuit member installed in the cap assembly, the short circuit member being adapted to deform when the internal pressure of the rechargeable battery increases and to thereby electrically connect the first terminal to the second terminal. In addition the short circuit member may comprise an arc-shaped portion that is convexed towards the interior of the case. Then, the cap assembly may optionally comprise a short circuit hole wherein the short circuit member is disposed. These embodiments may further comprise a first short circuit tab electrically connected to the first terminal and a cap insulation member installed between the first short circuit tab and the cap assembly and adapted to electrically insulate the first short circuit tab from the cap assembly, wherein the short circuit member is electrically connected to the second terminal.

According to an embodiment of the present invention, when a short circuit occurs by overcurrent, a blocking member allows a fuse member to be in a short circuit state, thereby improving safety of a rechargeable battery.

### BRIEF DESCRIPTION OF THE DRAWINGS

FIG. 1 is a perspective view that illustrates a rechargeable battery according to a first embodiment of the present invention;
FIG. 2 is a cross-sectional view that is taken along the line 11-11 of FIG. 1;
FIG. 3 is a partial exploded perspective view that illustrates a rechargeable battery according to a first embodiment of the present invention;
FIG. 4 is a cross-sectional view of a rechargeable battery according to a second embodiment of the present invention;
FIG. 5 is a perspective view that illustrates a negative current collection member of a rechargeable battery according to a second embodiment of the present invention;
FIG. 6 is a partial cross-sectional view of a rechargeable battery according to a third embodiment of the present invention;
FIG. 7 is a partial exploded perspective view that illustrates a rechargeable battery according to a third embodiment of the present invention;
FIG. 8 is a perspective view that illustrates a negative current collection member of a rechargeable battery according to a fourth embodiment of the present invention;
FIG. 9 is a partial cross-sectional view of a rechargeable battery according to a fifth embodiment of the present invention;
FIG. 10 is a partial exploded perspective view that illustrates a rechargeable battery according to a fifth embodiment of the present invention;
FIG. 11 is a partial cross-sectional view of a rechargeable battery;
FIG. 12 is a perspective view that illustrates an positive current collection member of a rechargeable battery;
FIG. 13 is a perspective view that illustrates a rechargeable battery according to a fifth embodiment of the present invention; and
FIG. 14 is a cross-sectional view that is taken along the line XIV-XIV of FIG. 13.

### DETAILED DESCRIPTION OF THE EMBODIMENTS

Hereinafter, the present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. In the drawings and description, like reference numerals designate like elements throughout the specification.

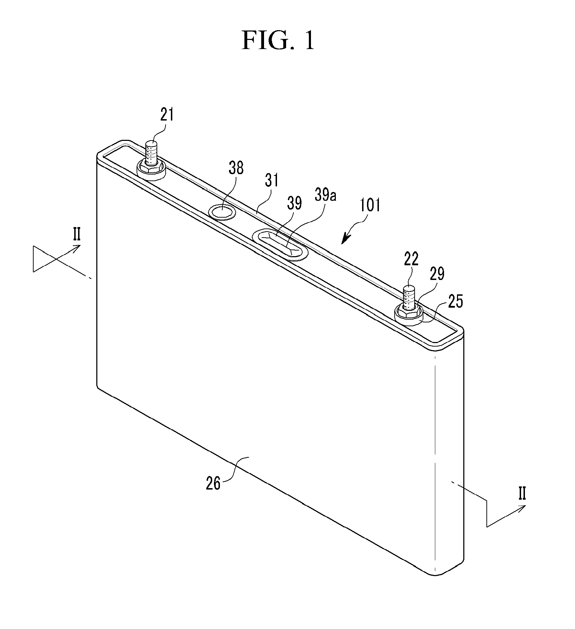

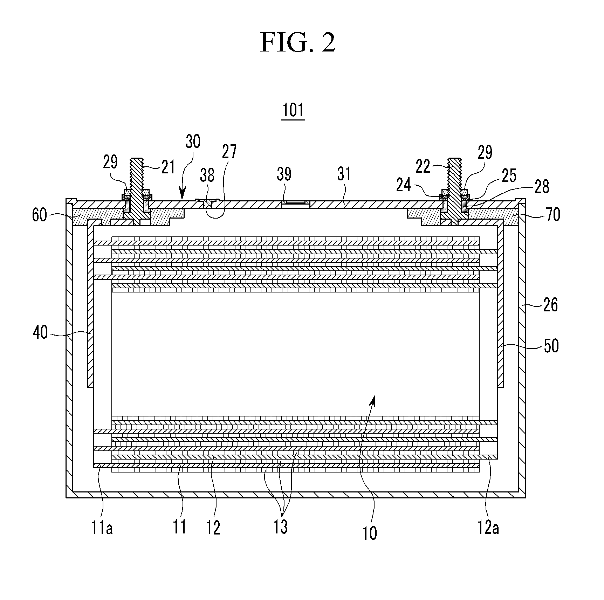

FIG. 1 is a perspective view that illustrates a rechargeable battery according to a first embodiment of the present invention, and FIG. 2 is a cross-sectional view that is taken along the line II-II of FIG. 1.

Referring to FIGS. 1 and 2, the rechargeable battery 101 according to the first embodiment of the present invention includes an electrode assembly 10 that is wound with a separator 13 interposed between a positive electrode 11 and a negative electrode 12, a case 26 in which the electrode assembly 10 is installed, and a cap assembly 30 that is combined with an opening of the case 26.

The rechargeable battery 101 according to the first embodiment will be described with reference to an example of an angular lithium ion rechargeable battery. However, the present invention is not limited thereto, and may be applied to various kinds of batteries such as a lithium polymer battery, cylindrical battery, etc.

The positive electrode 11 and negative electrode 12 include a coating portion that is a region on which an active material is coated on a current collection body that is formed of metal foil of the thin plate and active material-non-coated portions 11a and 12a that are regions on which the active material is not coated.

The positive active material-non-coated portion 11 a is formed at one end of the positive electrode 11 in a length direction of the positive electrode 11 and the negative active material-non-coated portion 12a is formed at the other end of the negative electrode 12 in a length direction of the negative electrode 12. In addition, the positive electrode 11 and negative electrode 12 are wound with the separator 13 that is an insulator interposed therebetween.

However, the present invention is not limited thereto, and the electrode assembly 10 has a structure in which the positive and negative including a plurality of sheets are layered with the separator interposed therebetween.

The case 26 has substantially a rectangular parallelepiped and an opened opening is formed on one surface thereof. The cap assembly 30 includes a cap plate 31 that covers the opening of the case 26, an positive terminal 21 that protrudes to the outside of the cap plate 31 and is electrically connected to the positive electrode 11, a negative terminal 22 that protrudes to the outside of the cap plate 31 and is electrically connected to the negative electrode 12, and a vent member 39 in which a notch 39a is formed so that it is broken according to predetermined internal pressure.

The cap plate 31 is formed of a thin plate, and an electrolyte injection inlet 27 for injecting an electrolyteis disposed at one side of the cap plate 31, and a sealing cork 38 that seals the electroylte injection inlet 27 is fixed to the cap plate 31.

The terminals 21 and 22 are provided while passing through the cap plate 31 such that a first gasket 25 that is disposed at an upper portion thereof and a second gasket 28 that is disposed at a lower portion thereof insulate the cap plate 31 and the terminals 21 and 22. In the present description, the terminals 21 and 22 include a positive electrode 21 and a negative electrode 22.

The terminals 21 and 22 have a cylinderical shape, nuts 29 that support the terminals 21 and 22 at upper portions thereof are installed in the terminals 21 and 22, and a thread of a screw is formed on the outer circumferences of the terminals 21 and 22 so as to be fastened to the nut 29. Meanwhile, at lower portions of the terminals 21 and 22, terminal flanges 21 a and 22a that support the terminals at lower portions thereof are formed. If the nuts 29 are fastened to the terminals 21 and 22, spaces between the terminals 21 and 22 and the cap plate 31 are sealed by pressing the first gasket 25 and the second gasket 28 by using the terminal flanges 21 a and 22a and the nuts 29.

Between the terminal flanges 21 a and 22a and the cap plate 31, lower insulation members 60 and 70 for insulation are installed. The positive terminal flanges 21 a and 22a and current collection members 40 and 50 are fastened to grooves that are formed in the lower insulation members 60 and 70 that are disposed below the cap plate 31. The lower insulation members 60 and 70 serve to insulate the current collection members 40 and 50 and terminals 21 and 22 from the cap plate 31, and are inserted between the terminal flanges 21 a and 22a and the cap plate 31 to be stably fixed.

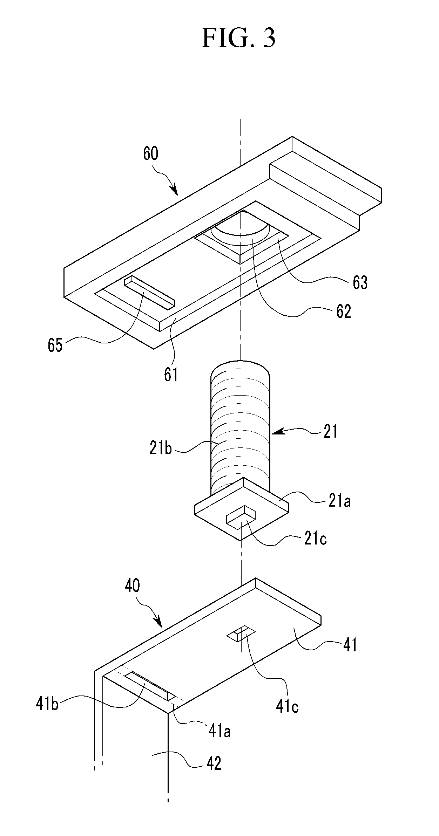

FIG. 3 is a partial exploded perspective view that illustrates a rechargeable battery according to a first embodiment of the present invention.

Referring to FIG. 3, in detail, the positive terminal 21 includes a terminal rod 21 b that protrudes from the terminal flange 21 a and has an outer circumferential surface that is threaded and a support protrusion 21 c that protrudes from the bottom of the terminal flange 21 a toward the bottom of the case 26.

In the lower insulation member 60, a terminal hole 62 into which the terminal rod 21 b is inserted, a flange groove 63 into which the terminal flange 21 a is inserted, and a connection groove 61 into which the terminal connection portion 41 of the positive current collection member 40 is inserted are formed. The positive current collection member 40 includes a terminal connection portion 41 that is attached to the positive terminal 21 by welding and an electrode connection portion 42 that is bent at the terminal connection portion 41 and attached to the electrode assembly 10 by welding.

In the positive current collection member 40, a support hole 41 c into which the support protrusion 21 c is inserted is formed, and the support protrusion 21 c and the positive current collection member 40 are connected by welding. In addition, a fuse portion 41 a that is deformed when overcurrent flows because it has a smaller cross-sectional area than other portions is formed in the positive current collection member 40. In the embodiment, the fuse portion 41 a is formed in the positive current collection member 40, but the present invention is not limited thereto, and the fuse portions 41 a may be connected in series between the electrode assembly 10 and the terminals 21 and 22. In the case when the case 26 acts as the terminal, the fuse portions 41 a may be connected in series between the electrode assembly 10 and the case 26.

The fuse hole 41 b is formed in the fuse portion 41 a and the fuse portion 41 a has a smaller cross-sectional area than other portions, and when overcurrent that excesses a limit current flows by an increase in current flow, the fuse portion 41 a is melted to prevent the electrode assembly 10 from being electrically connected to the positive terminal 21.

The blocking member 65 is inserted into the fuse hole 41 b, and the blocking member 65 is made of a material that has an electrical insulation property. In the embodiment, the blocking member 65 is integrally formed with the lower insulation member 60 and fixed to the lower insulation member 60, but the present invention is not limited thereto, and the blocking member 65 may be inserted into the fuse hole 41 b.

The blocking member 65 supports the terminal connection portion 41 to be separated after the fuse portion 41 a is melted. After the fuse portion 41 a is melted, if vibration or impact is transferred from the outside, the terminal connection portion 41 may be connected again. As described above, if the terminal connection portion 41 is connected again, overcurrent flows, so that the rechargeable battery 101 may be ignited or exploded. However, as described in the embodiment, if the blocking member 65 is inserted into the fuse hole 41 b, since the blocking member 65 supports the melted portion to be separated, it is possible to prevent the melted portion from being connected again.

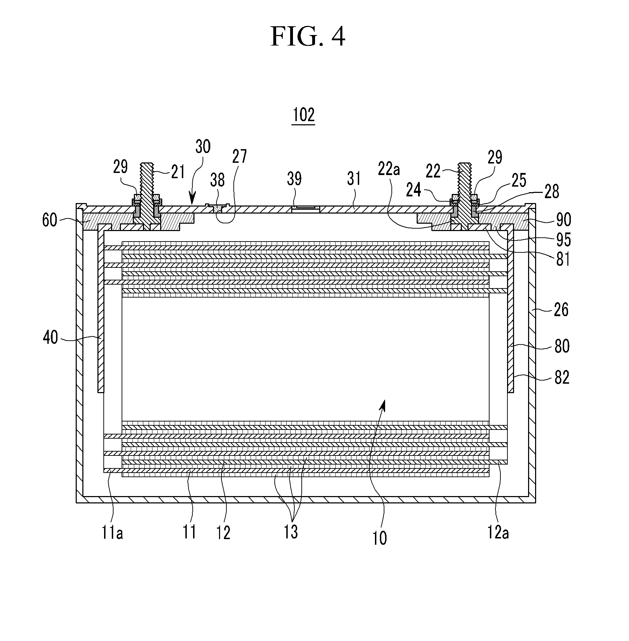

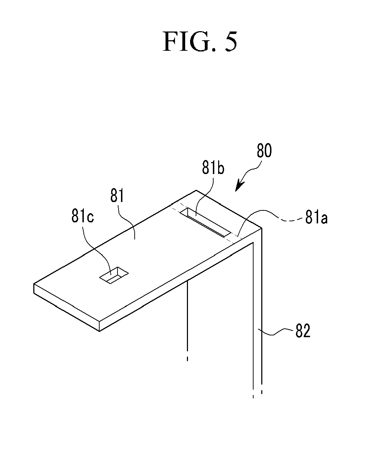

FIG. 4 is a cross-sectional view of a rechargeable battery according to a second embodiment of the present invention, and FIG. 5 is a perspective view that illustrates a negative current collection member of a rechargeable battery according to a second embodiment of the present invention.

Since the rechargeable battery 102 according to the embodiment is constituted by the same structures as the rechargeable battery according to the first embodiment with the exception of the structures of the negative current collection member 80 and the lower insulation member 90, description of the same structures will be omitted.

The negative current collection member 80 according to the embodiment includes a terminal connection portion 81 that is attached to the positive terminal 21 by welding and an electrode connection portion 82 that is bent at the terminal connection portion 81 and attached to the electrode assembly 10 by welding.

The support hole 81 c into which the support protrusion that is formed at a lower portion of the negative terminal 22 is inserted and a fuse portion 81a that blocks current by deformation when overcurrent flows are formed in the negative current collection member 80. The fuse hole 81 b is formed in the fuse portion 81 a, and the fuse portion 81 a has a smaller cross-sectional area than other portions. When overcurrent flows, the fuse portion 81 a is melted, thereby preventing the electrode assembly 10 from being electrically connected to the negative terminal 22.

A blocking member 95 that has an electric insulation property is inserted into the fuse hole 81 b, and the blocking member 95 is fixed to the lower insulation member 90.

As described in the embodiment, since the blocking member 95 is inserted into the fuse hole 81 b that is formed in the fuse portion 81 a and supports the fuse portion 81 a to be separated, after the fuse portion 81 a is melted, even though vibration or impact is applied, the current is blocked and then the current flows, such that it is possible to prevent the rechargeable battery 102 from being overheated.

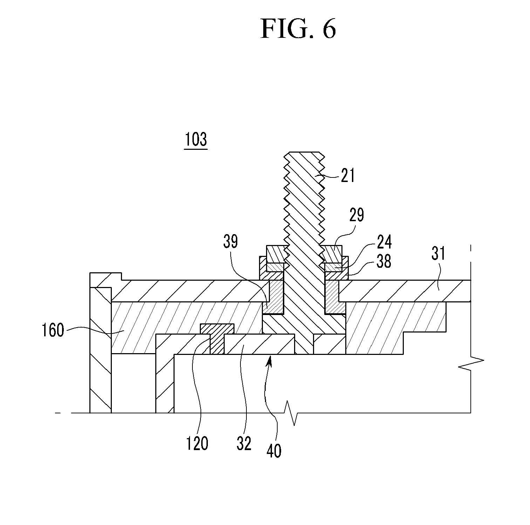

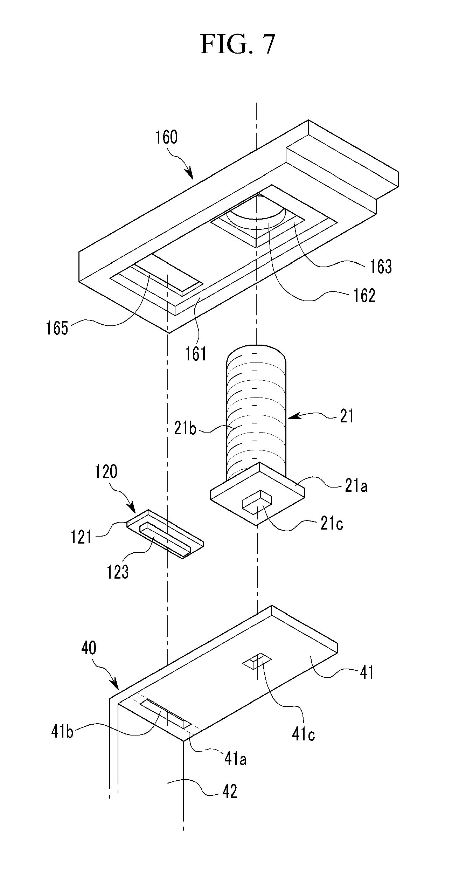

FIG. 6 is a cross-sectional view of a rechargeable battery according to a third embodiment of the present invention, and FIG. 7 is a partial exploded perspective view of a rechargeable battery according to a third embodiment of the present invention.

Referring to FIG. 6 and FIG. 7, since the rechargeable battery according to the embodiment is constituted by the same structures as the rechargeable battery according to the first embodiment with the exception of the structures of the blocking member 120 and the lower insulation member 160, description of the same structures will be omitted.

As shown in FIG. 6 and FIG. 7, a fuse portion 41 a that is melted to block the current when overcurrent flows because it has a smaller cross-sectional area than other portions is formed in the positive current collection member 40.

The fuse hole 41 b is formed in the fuse portion 41 a, and the blocking member 120 that has an electric insulation property is inserted into the fuse hole 41 b. The blocking member 120 includes a support plate 121 that is disposed between the terminal connection portion 41 and the lower insulation member 160 and a blocking protrusion 123 that protrudes from the support plate 121 and is inserted into the fuse hole 41 b. The support plate 121 has a larger cross-sectional area than the fuse hole 41 b, so that it is not inserted into the fuse hole and contacted with an upper surface of the terminal connection portion.

A terminal hole 162 into which the terminal rod 21 b is inserted, a flange groove 163 into which the terminal flange 21 a is inserted, and a connection groove 161 into which the terminal connection portion 41 of the positive current collection member 40 is inserted, and a blocking groove 165 into which the support plate 121 is inserted are formed in the lower insulation member 160. The blocking member 120 is disposed between the upper portion of the terminal connection portion 41 and the lower insulation member 160.

As described in the embodiment, if the blocking member 120 is inserted into the fuse hole 41 b that is formed in the fuse portion 41 a, after the fuse portion 41 a is melted, even though vibration or impact is applied, the melted portion thereof is connected again, thus, it is possible to prevent the rechargeable battery 103 from being overheated. In addition, since a portion of the support plate 121 is melted by heat generated when the fuse portion 41 a is melted and inserted into the fuse hole 41 b, it is possible to more stably separate the melted portion thereof.

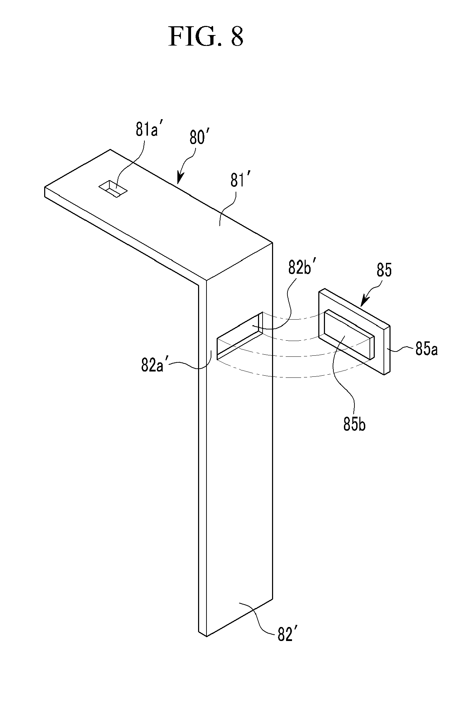

FIG. 8 is a perspective view that illustrates a negative current collection member of a rechargeable battery according to a fourth embodiment of the present invention.

Referring to FIG. 8, since the rechargeable battery according to the embodiment is constituted by the same structures as the rechargeable battery according to the first embodiment with the exception of the structure of the negative current collection member 80', description of the same structures will be omitted.

As shown in FIG. 8, the negative current collection member 80' according to the embodiment includes a terminal connection portion 81' that is attached to the negative terminal 22 by welding and an electrode connection portion 82' that is bent at the terminal connection portion 81' and attached to the electrode assembly 10 by welding.

A support hole 81a' into which the support protrusion of the negative terminal 22 is inserted is formed in the connection 81', and a fuse portion 82a' that is melted when the overcurrent flows because of a smaller cross-sectional area than other portions to block the current is formed in the electrode connection portion 82'.

The fuse hole 82b' is formed in the fuse portion 82a' and the fuse portion 82a' has a smaller cross-sectional area than other portions, and when overcurrent flows, the fuse portion 82a' is melted to prevent the electrode assembly 10 from being electrically connected to the terminal.

The blocking member 85 is inserted into the fuse hole 82b', and the blocking member 85 is made of a material that has an electric insulation property. In the embodiment, the blocking member 85 includes a support plate 85a that is closely contacted with the electrode connection portion 82' and a blocking protrusion 85b that protrudes from the support plate 85a and is inserted into the fuse hole 82b'. The blocking member 85 is positioned closely adjacent to the side of the negative current collection member 80'.

As described in the embodiment, if the blocking member 85' inserted into the fuse hole 82b' that is formed in the fuse portion 82a', after the fuse portion 82a' is melted, even though vibration or impact is applied, the melted portion thereof is connected again, thus, it is possible to prevent the rechargeable battery from being overheated.

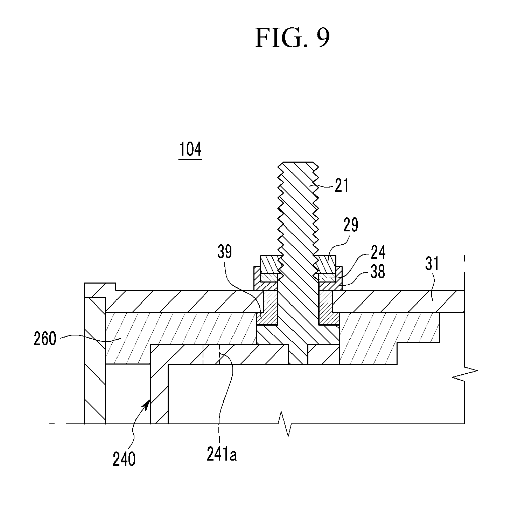

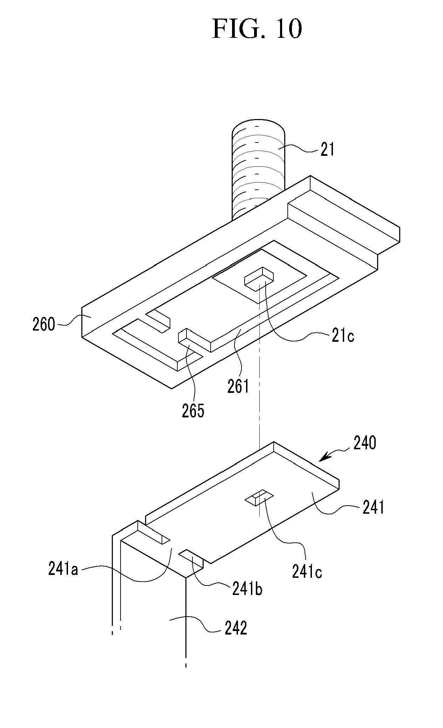

FIG. 9 is a cross-sectional view of a rechargeable battery according to a fifth embodiment of the present invention, and FIG. 10 is a partial exploded perspective view of a rechargeable battery according to a fifth embodiment of the present invention.

Since the rechargeable battery 104 according to the embodiment is constituted by the same structures as the rechargeable battery according to the first embodiment with the exception of the structures of the positive current collection member 240 and the lower insulation member 260, description of the same structures will be omitted.

The positive current collection member 240 according to the embodiment includes a terminal connection portion 241 that is attached to the positive terminal 21 by welding and an electrode connection portion 242 that is bent at the terminal connection portion 241 and attached to the electrode assembly 10 by welding.

In the positive current collection member 240, a support hole 241 c into which the support protrusion 21 c is inserted is formed, and the support protrusion 21 c and the positive current collection member 240 are connected by welding. In addition, when overcurrent flows, a fuse portion 241 a that is melted to block the current is formed in the positive current collection member 240. The fuse groove 241 b is formed in the fuse portion 241 a, and the fuse portion 241 a has a smaller cross-sectional area than other portions. The fuse groove 241 b extends from both sides of the terminal connection portion 241 to the inside thereof, and the fuse portion 241 a is disposed between the fuse grooves 241 b. The blocking member 265 is inserted into the fuse groove 241 b, and the blocking member 265 is made of a material that has an electric insulation property.

The connection groove 261 into which the terminal connection portion 241 is inserted is formed in the lower insulation member 260, and the blocking member 265 is fixed to the connection groove 261. The blocking member 265 extends from both side walls of the connection groove 261 to the inside thereof.

As described in the embodiment, if the blocking member 265 is inserted into the fuse groove 241 b that is formed in the fuse portion 241 a, after the fuse portion 241a is melted, even though vibration or impact is applied, the melted portion thereof is connected again, thus, it is possible to prevent the rechargeable battery 104 from being overheated.

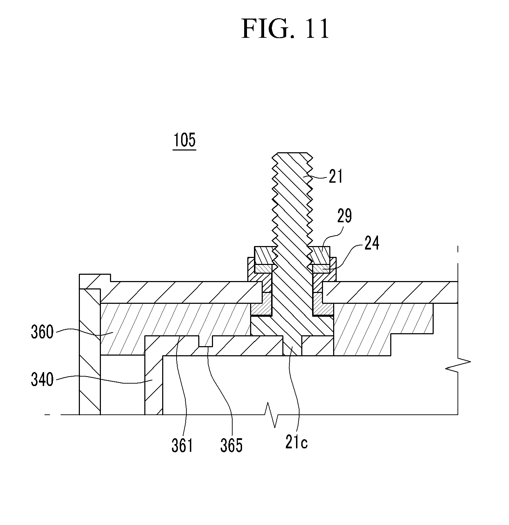

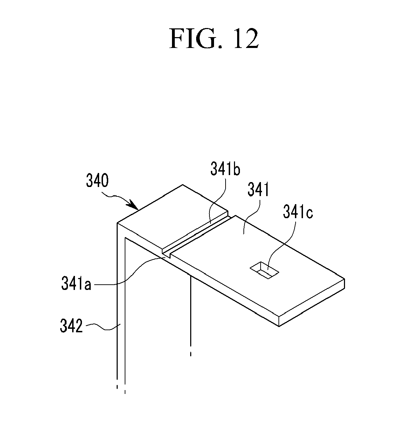

FIG. 11 is a partial cross-sectional view of a rechargeable battery and FIG. 12 is a perspective view that illustrates a positive current collection member of a rechargeable battery according to an embodiment that does not form part of the present invention.

Since the rechargeable battery 105 according to the embodiment is constituted by the same structures as the rechargeable battery according to the first embodiment with the exception of the structures of the positive current collection member 340 and the lower insulation member 360, description of the same structures will be omitted.

The positive current collection member 340 according to the embodiment includes a terminal connection portion 341 that is attached to the terminal by welding and an electrode connection portion 342 that is bent at the terminal connection portion 341 and attached to the electrode assembly 10 by welding.

A support hole 341 c into which the support protrusion 21 c is inserted and a fuse portion 341 a that is melted to block current when overcurrent flows are formed in the terminal connection portion 341. The fuse groove 341 b is formed in the fuse portion 341 a, and the fuse portion 341 a has a smaller cross-sectional area than other portions. The fuse groove 341 b is formed on the upper surface of the terminal connection portion 341, and extends in a width direction of the terminal connection portion 341. The blocking member 365 is inserted into the fuse groove 341 b, and the blocking member 365 is made of a material that has an electric insulation property.

The blocking member 365 is integrally formed with the lower insulation member 360, protrudes from the lower insulation member 360, and extends in a width direction of the lower insulation member 360.

As described in the embodiment, if the blocking member 365 is inserted into the fuse groove 341 b, after the fuse portion 341 a is melted, even though vibration or impact is applied, it may not be connected thereto but stably separated.

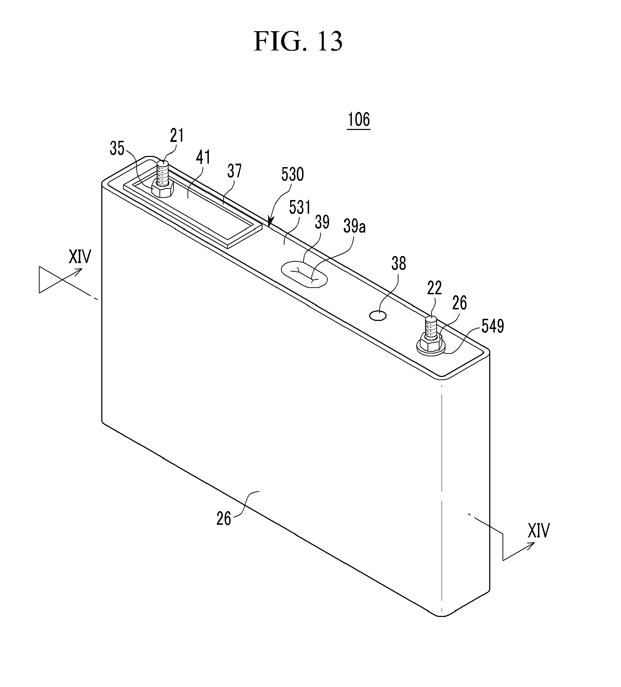

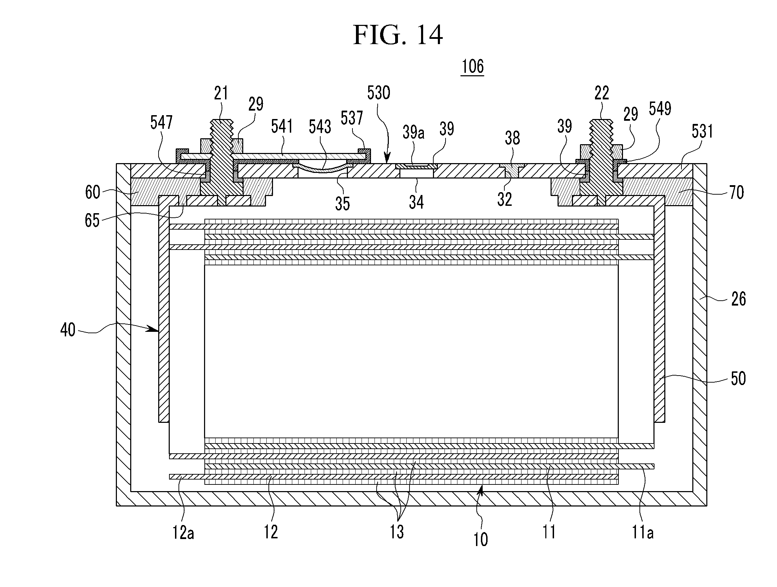

FIG. 13 is a perspective view that illustrates a rechargeable battery according to a fifth embodiment of the present invention, and FIG. 14 is a cross-sectional view that is taken along the line XIV-XIV of FIG. 13.

Referring to FIGS. 13 and 14, the rechargeable battery 106 according to the embodiment includes the electrode assembly 10, the case 26 in which the electrode assembly 10 is installed, and a cap assembly 530 that is combined with the opening of the case 26.

Since the rechargeable battery 104 according to the embodiment is constituted by the same structures as the rechargeable battery according to the first embodiment with the exception of the structures of short-circuiting the positive electrode 11 and the negative electrode 12, description of the same structures will be omitted.

A vent member 39, a sealing cork 38 and a short circuit member 543 are installed in the cap plate 31. The short circuit member 543 is deformed when the internal pressure of the rechargeable battery 106 increases to electrically connect the positive terminal 21 to the negative terminal 22.

The positive terminal 21 is electrically connected to the positive electrode 11 via the positive current collection member 40, and the negative terminal 22 is also electrically connected to the negative electrode 12 via the negative current collection member 50. The positive current collection member has the same structures as the positive current collection member according to the first embodiment that is shown in FIG. 3, and the fuse portion 41 a that is melted when overcurrent flows is formed in the positive current collection member 40, and the blocking member 65 is inserted into the fuse hole 41 b of the fuse portion 41 a.

At this time, the fuse portion 41 a is disposed above the electrode assembly 10. As described in the embodiment, if the fuse portion 41 a is disposed above the electrode assembly 10, the fuse portion 41a is not contacted with the electrolyte. Therefore, it is possible to stably prevent the electrolyte from being ignited by heat generated in the fuse portion 41 a.

Meanwhile, a first short circuit tab 541 that is electrically connected to the positive terminal 21 is installed on the cap plate 531 at the positive terminal 21. A cap insulation member 537 that electrically insulates the first short circuit tab 541 and the cap plate 531 from each other is installed between the first short circuit tab 541 and the cap plate 531.

A connection plate 549 that electrically connects the negative terminal 22 and the cap plate 531 is installed in the negative terminal 22. The connection plate 549 is made of metal that has conductivity, and is closely contacted with the cap plate 531 through the nut 29.

The short circuit member 543, when the internal pressure of the rechargeable battery 106 increases, is deformed, and because of the deformation of the short circuit member 543, the first short circuit tab 541 that is electrically connected to the positive terminal 21 and the second short circuit tab that is electrically connected to the negative terminal 22 are short circuited. In the embodiment, the cap plate 531 that is electrically connected to the negative terminal 22 becomes the second short circuit tab.

The short circuit member 543 is electrically connected to the cap plate, and the short circuit member 543 is disposed between the cap insulation member 537 and the cap plate 531 in the short circuit hole 35 that is formed in the cap plate 531. The short circuit member 543 is constituted by an arc-shaped curved portion that is convexed downward and an inversion plate that is provided with a circumferential portion that is fixed to the cap plate 531.

At this time, the fuse portions 41 a are connected in series between the short circuit member 543 and the electrode assembly 10.

The first short circuit tab 541 is formed so as to cover the short circuit hole 35, if it is deformed so that the short circuit member 543 protrudes upward by an increase in internal pressure of the case 26, the first short circuit tab 541 and the cap plate 531 are electrically connected to each other via the short circuit member 543, thereby causing a short circuit.

If the short circuit occurs, large current flows instantaneously, the fuse portion 41 a is melted because of the overcurrent, so that electric connection between the positive terminal 21 and the electrode assembly 10 is prevented.

As described above, according to the embodiment, large current flows instantaneously by causing the short circuit and the fuse portion 41 a is melted by using the overcurrent that is generated at that time to block the current. In a predetermined condition, if operations of the short circuit and fuse portion are caused, the operation of the rechargeable battery may be stopped, thereby improving safety.

If the fuse portion 41 a is not installed, because of the large current that is generated after the short circuit is caused, the short circuit member 43 is melted, so that a short circuit state cannot be maintained. If the short circuit state is not maintained, since the rechargeable battery in which internal temperature and pressure are increased is repetitively charged and discharged, there is a risk of explosion or ignition.

In addition, unlike a general fuse, if a fuse that is operated at the time of internal short circuit is designed, since a thermal condition where the fuse is operated can be sufficiently increased, problems of resistance and heat can be solved. That is, at the time of internal short circuit, since several hundreds times larger current flows as compared to the case of normal operation, if a fuse that is operated at this current is installed, resistance and heat that are generated from the fuse at the case of normal operation can be very small.

In addition, since the blocking member 65 separates the melted portions from each other, after the melting, it is possible to prevent the reconnection.

## Claims

1. A rechargeable battery (101, 102, 103, 106) including an electrode assembly (10) installed in a case (26) sealed by a cap assembly (30), wherein the electrode assembly (10) comprises first and second electrodes (11, 12), the first electrode (11) being connected to a first current collection member (40, 80, 80'), wherein the first current collection member (40, 80, 80') includes a first electrode connection portion (42, 82, 82',) having a first conductivity and a first fuse portion (41 a, 81 a, 82a',) having a second conductivity smaller than the first conductivity, **characterised by** a blocking member (65, 120,) having an electric insulating property and being complementarily formed with regard to the first fuse portion and in contact with the first fuse portion, wherein the first current collection member (40, 80, 80') includes a fuse hole (41 b, 81 b, 82b') located in the first fuse portion (41 a, 81 a, 82a',) wherein the first current collection member further comprises a terminal connection portion (41, 81, 81') and wherein the blocking member (65, 123, 85b) is inserted into the fuse hole (41 b, 81 b, 82b') to prevent the first electrode connection portion (42, 82, 82') and the terminal connection portion (41, 81, 81') from reconnecting after the first fuse portion (41 a, 81 a, 82a') has melted.

2. The rechargeable battery (101, 102, 103, 106) of claim 1, wherein the first electrode connection portion (42, 82, 82',) has a first cross-sectional area and wherein the first fuse portion has a second cross-sectional area smaller than the first cross-sectional area.

3. The rechargeable battery (101, 102, 103, 106) of one of the claims 1 or 2, .further including a lower insulation member (60, 160,) arranged between the cap assembly (30) and the first current collection member (40, 80, 80') and having an electric insulating property.

4. The rechargeable battery (101, 102, 104, 106) of claim 3, wherein the lower insulation member (60,) and the blocking member (65) are integrally formed.

5. The rechargeable battery (103) of claim 3, wherein the blocking member is a blocking protrusion (123) protruding from a support plate (121) disposed between the lower insulation member (160) and the first current collection member (40).

6. The rechargeable battery (101, 102, 103, 106) of one of the preceding claims, wherein the first fuse portion (41 a, 81 a, 82a',) is series-connected between the first electrode connection portion (42, 82, 82',) and the first terminal connection portion.

7. The rechargeable battery (101, 102, 103, 106) one of the preceding claims, wherein the blocking member is inserted into the fuse hole.

8. The rechargeable battery (101, 102, 103, 106) of one of the preceding claims, wherein the second current collection member (80, 80') includes a second electrode connection portion (82, 82') having a third conductivity and a second fuse portion (81 a, 82a') having a fourth conductivity area smaller than the third conductivity.

9. The rechargeable battery (101, 102, 103, 106) of one of the preceding claims, wherein the first fuse portion is located within the first electrode connection portion (42, 82, 82').

## Patentansprüche

1. Wiederaufladbare Batterie (101, 102, 103, 106), aufweisend eine Elektrodenanordnung (10), die in einem Gehäuse (26), das von einer Deckelanordnung (30) abgedichtet wird, eingebaut ist, wobei die Elektrodenanordnung (10) eine erste und zweite Elektrode (11, 12) aufweist, wobei die erste Elektrode (11) mit einem ersten Stromsammelelement (40, 80, 80') verbunden ist, wobei das erste Stromsammelelement (40, 80, 80') einen ersten Elektrodenverbindungsabschnitt (42, 82, 82'), der eine erste Leitfähigkeit aufweist, und einen ersten Sicherungsabschnitt (41a, 81a, 82a'), der eine zweite Leitfähigkeit aufweist, die kleiner als die erste Leitfähigkeit ist, aufweist, **gekennzeichnet durch** ein Blockierelement (65, 120), das eine elektrische Isoliereigenschaft aufweist und bezüglich des ersten Sicherungsabschnitts komplementär ausgebildet ist und mit dem ersten Sicherungsabschnitt in Kontakt steht, wobei das erste Stromsammelelement (40, 80, 80') ein Sicherungsloch (41b, 81b, 82b'), das im ersten Sicherungsabschnitt (41a, 81a, 82a') angeordnet ist, aufweist, wobei das erste Stromsammelelement ferner einen Anschlussverbindungsabschnitt (41, 81, 81') aufweist und wobei das Blockierelement (65, 123, 85b) in das Sicherungsloch (41b, 81b, 82b') eingesetzt ist, um zu verhindern, dass sich der erste Elektrodenverbindungsabschnitt (42, 82, 82') und der Anschlussverbindungsabschnitt (41, 81, 81') wieder verbinden, nachdem der erste Sicherungsabschnitt (41a, 81a, 82a') geschmolzen ist.

2. Wiederaufladbare Batterie (101, 102, 103, 106) nach Anspruch 1, wobei der erste Elektrodenverbindungsabschnitt (42, 82, 82') eine erste Querschnittsfläche aufweist und wobei der erste Sicherungsabschnitt eine zweite Querschnittsfläche, die kleiner als die erste Querschnittsfläche ist, aufweist.

3. Wiederaufladbare Batterie (101, 102, 103, 106) nach einem der Ansprüche 1 oder 2, ferner aufweisend ein unteres Isolierelement (60, 160), das zwischen der Deckelanordnung (30) und dem ersten Stromsammelelement (40, 80, 80') angeordnet ist und eine elektrische Isoliereigenschaft aufweist.

4. Wiederaufladbare Batterie (101, 102, 104, 106) nach Anspruch 3, wobei das untere Isolierelement (60) und das Blockierelement (65) einstückig ausgebildet sind.

5. Wiederaufladbare Batterie (103) nach Anspruch 3, wobei das Blockierelement ein Blockiervorsprung (123) ist, der aus einer Stützplatte (121) vorragt, die zwischen dem unteren Isolierelement (160) und dem ersten Stromsammelelement (40) angeordnet ist.

6. Wiederaufladbare Batterie (101, 102, 103, 106) nach einem der vorhergehenden Ansprüche, wobei der erste Sicherungsabschnitt (41a, 81a, 82a') zwischen dem ersten Elektrodenverbindungsabschnitt (42, 82, 82') und dem ersten Anschlussverbindungsabschnitt in Reihe geschaltet ist.

7. Wiederaufladbare Batterie (101, 102, 103, 106) nach einem der vorhergehenden Ansprüche, wobei das Blockierelement in das Sicherungsloch eingesetzt ist.

8. Wiederaufladbare Batterie (101, 102, 103, 106) nach einem der vorhergehenden Ansprüche, wobei das zweite Stromsammelelement (80, 80') einen zweiten Elektrodenverbindungsabschnitt (82, 82'), der eine dritte Leitfähigkeit aufweist, und einen zweiten Sicherungsabschnitt (81a, 82a'), der einen vierten Leitfähigkeitsbereich aufweist, der kleiner als die dritte Leitfähigkeit ist, aufweist.

9. Wiederaufladbare Batterie (101, 102, 103, 106) nach einem der vorhergehenden Ansprüche, wobei der erste Sicherungsabschnitt im ersten Elektrodenverbindungsabschnitt (42, 82, 82') angeordnet ist.

## Revendications

1. Batterie rechargeable (101, 102, 103, 106), comprenant un ensemble d'électrodes (10) installé dans un boîtier (26) scellé par un ensemble de capuchon (30), dans laquelle l'ensemble d'électrodes (10) comprend une première et seconde électrodes (11, 12), la première électrode (11) étant connectée à un premier élément de collecte de courant (40, 80, 80'), le premier élément de collecte de courant (40, 80, 80') comprenant une première partie de connexion d'électrode (42, 82, 82') ayant une première conductivité et une première partie de fusible (41a, 81a, 82a') ayant une deuxième conductivité inférieure à la première conductivité, **caractérisée par** un élément de blocage (65, 120) ayant une propriété d'isolation électrique et étant formé de manière complémentaire par rapport à la première partie de fusible et de manière à être en contact avec la première partie de fusible, le premier élément de collecte de courant (40, 80, 80') comprenant un trou de fusible (41b, 81b, 82b') situé dans la première partie de fusible (41a, 81a, 82a'), le premier élément de collecte de courant comprenant en outre une partie de connexion de borne (41, 81, 81'), et l'élément de blocage (65, 123, 85b) étant inséré dans le trou de fusible (41b, 81b, 82b') pour empêcher la première partie de connexion d'électrode (42, 82, 82') et la partie de connexion de borne (41, 81, 81') d'être connectées de nouveau après que la première partie de fusible (41a, 81a, 82a') a fondu.

2. Batterie rechargeable (101, 102, 103, 106) selon la revendication 1, dans laquelle la première partie de connexion d'électrode (42, 82, 82') a une première surface de section transversale, et dans laquelle la première partie de fusible a une deuxième surface de coupe transversale inférieure à la première surface de coupe transversale.

3. Batterie rechargeable (101, 102, 104, 106) selon l'une des revendications 1 ou 2, comprenant en outre un élément isolant (60, 160) inférieur disposé entre l'ensemble de capuchon (30) et le premier élément de collecte de courant (40, 80, 80') et ayant une propriété d'isolation électrique.

4. Batterie rechargeable (101, 102, 104, 106) selon la revendication 3, dans laquelle l'élément isolant (60) inférieur et l'élément de blocage (65) sont formés d'un seul tenant.

5. Batterie rechargeable (103) selon la revendication 3, dans laquelle l'élément de blocage est une saillie de blocage (123) faisant saillie d'une plaque de support (121) disposée entre l'élément isolant (160) inférieur et le premier élément de collecte de courant (40).

6. Batterie rechargeable (101, 102, 103, 106) selon l'une des revendications précédentes, dans laquelle la première partie de fusible (41a, 81a, 82a') est connectée en série entre la première partie de connexion d'électrode (42, 82, 82') et la première partie de connexion de borne.

7. Batterie rechargeable (101, 102, 103, 106) selon l'une des revendications précédentes, dans laquelle l'élément de blocage est inséré dans le trou de fusible.

8. Batterie rechargeable (101, 102, 103, 106) selon l'une des revendications précédentes, dans laquelle le second élément de collecte de courant (80, 80') comprend une seconde partie de connexion d'électrode (82, 82') ayant une troisième conductivité et une seconde partie de fusible (81a, 82a') ayant une quatrième surface de conductivité inférieure à la troisième conductivité.

9. Batterie rechargeable (101, 102, 103, 106) selon l'une des revendications précédentes, dans laquelle la première partie de fusible est située dans la première partie de connexion d'électrode (42, 82, 82').
